# Europäisches Patentamt
# European Patent Office
# Office européen des brevets

(19)

(11) Veröffentlichungsnummer: **0 093 850**
**B1**

(12) # EUROPÄISCHE PATENTSCHRIFT

(45) Veröffentlichungstag der Patentschrift:
16.12.87

(51) Int. Cl.⁴: **G 01 B 3/00**, G 01 B 5/00

(21) Anmeldenummer: **83102250.4**

(22) Anmeldetag: **08.03.83**

(54) Längen- oder Winkelmeßsystem.

(30) Priorität: **04.05.82 DE 3216616**

(43) Veröffentlichungstag der Anmeldung:
**16.11.83 Patentblatt 83/46**

(45) Bekanntmachung des Hinweises auf die Patenterteilung:
**16.12.87 Patentblatt 87/51**

(84) Benannte Vertragsstaaten:
**AT CH FR GB IT LI NL SE**

(56) Entgegenhaltungen:
**DE-A-3 037 042**
**GB-A-1 481 649**
**US-A-3 566 140**
**US-A-3 628 032**
**US-A-4 047 586**
**US-A-4 273 448**

(73) Patentinhaber: **Dr. Johannes Heidenhain GmbH,
Nansenstrasse 17, D-8225 Traunreut (DE)**

(72) Erfinder: **Burkhardt, Horst, Dr., Fraueneichweg 12,
D-8221 Truchtlaching (DE)**
Erfinder: **Nelle, Günther, Dr., Eichenweg 12, D-8221
Bergen (DE)**

EP 0 093 850 B1

## Beschreibung

Die Erfindung betrifft ein Längen- oder Winkelmeßsystem mit einer Einrichtung zur Fehlerkorrektur gemäß dem Oberbegriff des Anspruchs 1.

Einrichtungen zu. Fehlerkorrektur bei Positionsmeßsystemen sind bereits bekannt.

In der DE-B-27 35 154 ist eine Korrektureinrichtung bei einem Längen- oder Winkelmeßsystem beschrieben, bei der die Meßteilung mindestens an einer Stelle etwa senkrecht zur Teilungsebene durch Druck- oder Zugwirkung entsprechend dem Fehlerverlauf geringfügig ausgelenkt wird; zur Auslenkung der Meßteilung sind Verstellglieder im Trägerkörper für die Meßteilung angebracht. Die Genauigkeit dieser nichtlinearen Korrektur hängt von der Anzahl der Verstellglieder pro Meßlängeneinheit ab.

Aus der DE-B-25 18 745 ist ein Längenmeßsystem bekannt, bei dem eine lineare Fehlerkorrektur durch Längsstauchen oder Längsstrecken des Maßstabs mittels Stauch- und Streckeinrichtungen an beiden Enden der Meßeinrichtung erfolgt; diese Korrektureinrichtung erlaubt keine nichtlineare Fehlerkorrektur.

Die US-A-4 047 586 offenbart eine Einrichtung zur Nullpunkteinstellung bei einer Waage, bei der die Teilung eines Teilungsträgers von einer Abtasteinheit mit einer Abtastteilung und zugehörigen Photoelementen abgetastet wird; die Abtastteilung ist gegenüber der Teilung um einen bestimmten Winkel zur Erzeugung eines Moiré-Streifenmusters geneigt. Zur Nullpunkteinstellung der Waage kann die Abtastteilung mit den zugehörigen Photoelementen in Bewegungsrichtung des Moiré-Streifenmusters verschoben werden.

Der DE-A-30 37 042 entnimmt man eine Einrichtung zur Fehlerkorrektur bei einem Positionsmeßsystem zur Messung der Relativlage zweier Objekte, bei dem eine Abtasteinheit zur Abtastung der Teilung einer Teilungsverkörperung über einen Mitnehmer mit einem der Objekte verbunden ist. Zur Fehlerkorrektur ist die in Längserstreckung der Teilungsverkörperung verlaufende Mittellinie der Teilung gegen die Meßrichtung zumindest abschnittsweise geneigt und die Relativbewegung der Abtasteinheit bezüglich der Teilungsverkörperung erfolgt parallel zur Mittlinie der Teilung. Die Abtasteinheit und der Mitnehmer sind über derart ausgebildete Kupplungselemente miteinander verbunden, daß sich bei einer Relativbewegung des Mitnehmers bezüglich der Teilungsverkörperung eine Relativbewegung zwischen den beiden Kupplungslementen ergibt, die eine korrigierende Relativbewegung zwischen der Abtasteinheit und der Teilungsverkörperung in Meßrichtung gemäß dem Fehlerverlauf bewirkt.

Die US-A-3 566 140 betrifft eine Positionsmeßeinrichrung, bei der eine Abtastplatte einen quer zur Meßrichtung verlaufenden lichtdurchlässigen Schlitz aufweist, dessen Längserstreckung mehrere Photoelemente zugeordnet sind; diese Abtastplatte tastet eine Meßteilung mit schräg zum Schlitz der Abtastplatte verlaufenden lichtdurchlässigen Schlitzen ab. Zur Beleuchtung dieser Schlitze und der Photoelemente wird eine Lichtquelle von einem Signalgenerator mittels eines ersten Signals moduliert. Die Ausgangssignale der Photoelemente werden jeweils um einen bestimmten Betrag verzögert und zu einem resultierenden Signal verknüpft; ein Phasenkomparator ermittelt die Phasendifferenz zwischen dem resultierenden Signal und dem ersten Signal.

In der DE-C-27 24 858 ist bei einem Längenmeßsystem eine Korrektureinrichtung mit einer Gliederkette beschrieben, deren Glieder gemäß dem Fehlerverlauf quer zur Meßrichtung einstellbar sind und von einem Übertragungselement abgegriffen werden, das eine korrigierende Relativbewegung in Meßrichtung zwischen einer parallel zur Teilungsebene eines Maßstabs geführten Abtasteinheit und dem Maßstab bewirkt; die Genauigkeit der Fehlerkorrektur ist von der Anzahl der Glieder pro Meßlängeneinheit abhängig.

Der DE-C-28 20 753 ist eine Einrichtung zur Fehlerkorrektur bei einem Längenmeßsystem zu entnehmen, bei der ein Fehlerkorrekturprofil integrierender Bestandteil eines Trägers für einen Maßstab ist und von einem Übertragungselement abgegriffen wird, das eine korrigierende Relativbewegung in Meßrichtung zwischen einer parallel zur Teilungsebene eines Maßstabs geführten Abtasteinheit und dem Maßstab bewirkt.

Die US-A-4 273 448 beschreibt eine Längenmeßeinrichtung, bei der die Teilung eines Maßstabs von einer Abtastteilung einer Abtastplatte abgetastet wird; der Maßstab ist mittels Befestigungsbügel an einem der zu messenden Objekte befestigt. Zur Korrektur von Teilungsfehlern und Maschinenfehlern werden die Befestigungsbügel gelockert, der Maßstab quer zur Meßrichtung um einen bestimmten Betrag gemäß einem linearen Fehlerverlauf verschoben und die Befestigungsbügel wieder angezogen.

Der Erfindung liegt die Aufgabe zugrunde, bei einem Längen- oder Winkelmeßsystem eine Einrichtung zur Fehlerkorrektur der genannten Gattung anzugeben, die mit einfachen Mitteln sowohl eine nichtlineare als auch eine lineare Fehlerkorrektur ermöglicht.

Diese Aufgabe wird erfindungsgemäß durch die Merkmale des Anspruchs 1 gelöst.

Die mit der Erfindung erzielten Vorteile bestehen insbesondere darin, daß die vorgeschlagene Korrektureinrichtung keiner Deformationen der Maßverkörperung sowie keiner aufwendigen mechanischen Elemente bedarf, wodurch sich ein einfacher und kostengünstiger Aufbau eines Positionsmeßsystems ergibt. Wegen des weitgehenden Fehlens verschleißbehafteter Teile und des geringen Raumbedarfs ist ein betriebssicherer und flexibler Einsatz gewährleistet. Diese Einrichtung erlaubt die Korrektur linearer und nichtlinearer Fehler unabhängig von der Meßlänge.

Weitere vorteilhafte Ausbildungen der Erfindung entnimmt man den abhängigen Ansprüchen.

Ausführungsbeispiele der Erfindung werden in der Zeichnung näher erläutert.

Es zeigen
Figur 1 - 4 Längenmeßsysteme mit einer Korrektureinrichtung,
Figur 5 - 6 Ausschnitte eines Längenmeßsystems nach Figur 4 mit einer Korrektureinrichtung nach der Erfindung und
Figur 7 - 12 Maßstäbe mit Abtastelementen.

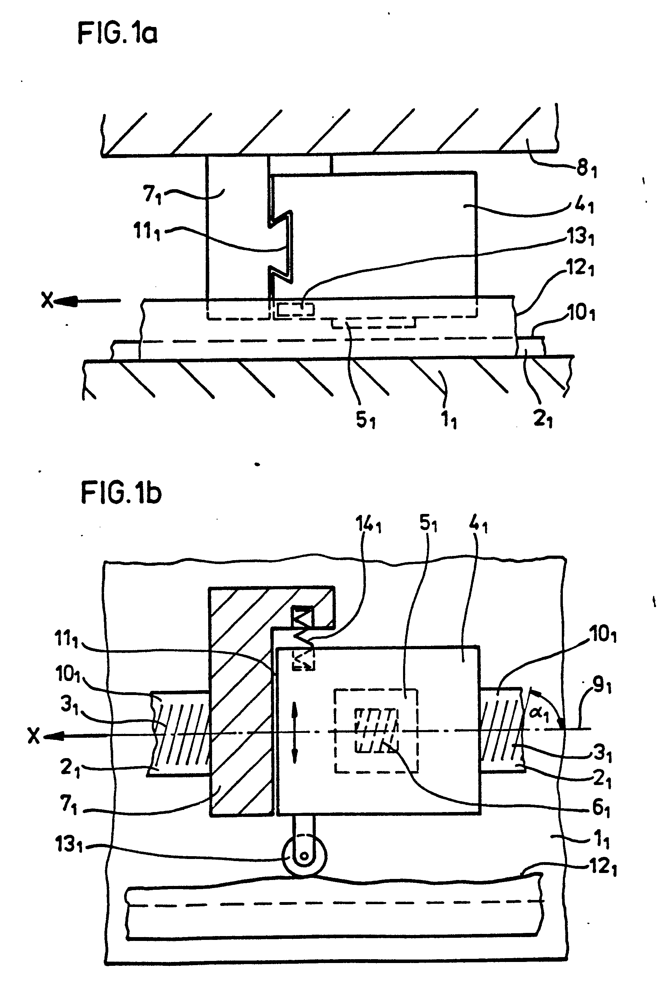

In Figur 1 a, b ist in zwei Ansichten ein Längenmeßsystem gezeigt, bei dem an einem Bett $1_1$ einer nicht dargestellten Maschine ein Maßstab $2_1$ beispielsweise durch Kleben befestigt ist, dessen Teilung $3_1$ von einer Abtasteinheit $4_1$ mittels einer Abtastplatte $5_1$ mit einer Teilung $6_1$ und in nicht gezeigter Weise mittels einer Beleuchtungseinrichtung und mittels photoelemente abgetastet wird; die Abtasteinheit $4_1$ ist mit einem Mitnehmer $7_1$ verbunden, der starr an einem Schlitten $8_1$ der Maschine befestigt ist. Zur Korrektur von Fehlern, insbesondere von Teilungsfehlern und/oder Maschinenfehlern, bei der Messung der Relativlage zwischen dem Schlitten $8_1$ und dem Bett $1_1$ der Maschine verläuft die Teilung $3_1$ des Maßstabs $2_1$ unter einem Winkel $\alpha_1$ kleiner 90° zu ihrer in Meßrichtung X verlaufenden Teilungsachse $9_1$ und ist die Abtasteinheit $4_1$ mitsamt der Abtastplatte $5_1$ senkrecht zur Teilungsachse $9_1$ parallel zur Teilungsebene $10_1$ das Maßstabs $2_1$ in einer schwalbenschwanzförmigen Füring $11_1$ mittels eines Fehlerkorrekturprofils $12_1$ verschiebbar, das neben dem Maßstab $2_1$ auf dem Bett $1_1$ befestigt ist und von einer in der Abtasteinheit $4_1$ gelagerten Rolle $13_1$ unter dem Bruck einer Feder $14_1$ abgetastet wird. Beim Meßvorgang erfährt somit die parallel zur Teilung $3_1$ des Maßstabs $2_1$ verlaufende Teilung $6_1$ der Abtastplatte $5_1$ eine korrigierende Relativbewegung in Meßrichtung X bezüglich der Teilung $3_1$ infolge der Verschiebung der Abtasteinheit $4_1$ senkrecht zur Teilungsachse $9_1$ so daß sich eine Meßwertkorrektur gemäß dem Fehlerverlauf in Meßrichtung X durch eine unterschiedlich gewichtete Abtastung der Teilung $3_1$ auf beiden Seiten der Teilungsachse $9_1$ ergibt.

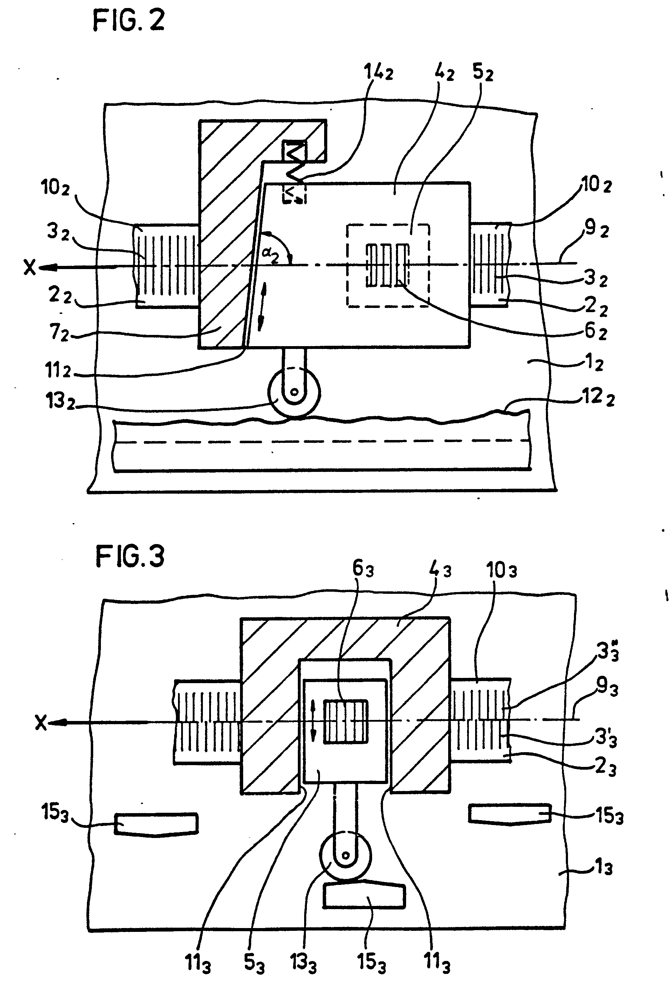

In Figur 2 ist in einer Ansicht ein Längenmeßsystem gezeigt, bei dem an einem Bett $1_2$ einer nicht dargestellten Maschine ein Maßstab $2_2$ beispielsweise durch Kleben befestigt ist, dessen Teilung $3_2$ von einer Abtasteinheit $4_2$ mittels einer Abtastplatte $5_2$ mit einer Teilung $6_2$ abgetastet wird; die Abtasteinheit $4_2$ ist mit einem Mitnehmer $7_2$ verbunden, der starr an einem nicht gezeigten Schlitten der Maschine befestigt ist. Zur Fehlerkorrektur verlaufen die Teilung $6_2$ der Abtastplatte $5_2$ und die Teilung $3_2$ des Maßstabs $2_2$ senkrecht zur Teilungsachse $9_2$ der Teilung $3_2$, während die Abtasteinheit $4_2$ mitsamt der Abtastplatte $5_2$ unter einem Winkel $\alpha_2$ kleiner 90° zur Teilungsachse $9_2$ parallel zur Teilungsebene $10_2$ des Maßstabs $2_2$ in einer Führung $11_2$ im Mitnehmer $7_2$ mittels eines Fehlerkorrekturprofils $12_2$ verschiebbar ist, das neben dem Maßstab $2_2$ auf dem Bett $1_2$ befestigt ist und von einer in der Abtasteinheit $4_2$ gelagerten Rolle $13_2$ unter dem Druck einer Feder $14_2$ abgetastet wird. Beim Meßvorgang erfährt somit die Teilung $6_2$ der Abtastplatte $5_2$ eine korrigierende Relativbewegung in Meßrichtung X bezüglich der Teilung $3_2$ des Maßstabs $2_2$ infolge der Verschiebung der Abtasteinheit $4_2$ unter dem Winkel $\alpha_2$ zur Teilungsachse $9_2$, so daß sich eine Meßwertkorrektur gemäß dem Fehlerverlauf in Meßrichtung X durch eine Abtastung der Teilung $3_2$ des Maßstabs $2_2$ auf beiden Seiten der Teilungsachse $9_2$ mit unterschiedlicher Gewichtung ergibt.

In Figur 3 ist in einer Ansicht ein Längenmeßsystem gezeigt, bei dem an einem Bett $1_3$ einer nicht dargestellten Maschine ein Maßstab $2_3$ beispielsweise durch Kleben befestigt ist, dessen Teilung $3_3$ von einer Abtasteinheit $4_3$ mittels einer Abtastplatte $5_3$ mit einer Teilung $6_3$ abgetastet wird; die Abtasteinheit $4_3$ ist starr an einem nicht gezeigten Schlitten der Maschine befestigt. Zur Fehlerkorrektur·verlaufen die Teilung $6_3$ der Abtastplatte $5_3$ und die Teilung $3_3$ des Maßstabs $2_3$ senkrecht zur Teilungsachse $9_3$ der Teilung $3_3$; die Teilung $3_3$ besteht aus zwei Teilungen $3_3'$, $3_3''$, die auf beiden Seiten der Teilungsachse $9_3$ um einen bestimmten Betrag in Meßrichtung X gegeneinander versetzt sind. Die Abtastplatse $5_3$ ist in einer Klemmführung $11_3$ in der Abtasteinheit $4_3$ senkrecht zur Teilungsachse $9_3$ parallel zur Teilungsebene $10_3$ des Maßstabs $2_3$ mittels Stellglieder $15_3$ verschiebbar, die neben dem Maßstab $2_3$ auf dem Bett $1_3$ angeordnet sind und von einer in der Abtastplatte $5_3$ gelagerten Rolle $13_3$ abgetastet werden. Beim Meßvorgang in Meßrichtung X werden infolge der Verschiebung der Abtastplatte $5_3$ senkrecht zur Teilungsachse $9_3$ die Teilungen $3_3'$, $3_3''$ auf beiden Seiten der Teilungsachse $9_3$ mit unterschiedlicher Gewichtung von der Teilung $6_3$ der Abtastplatte $5_3$ abgetastet, so daß sich eine Meßwertkorrektur gemäß dem Fehlerverlauf in Meßrichtung X ergibt.

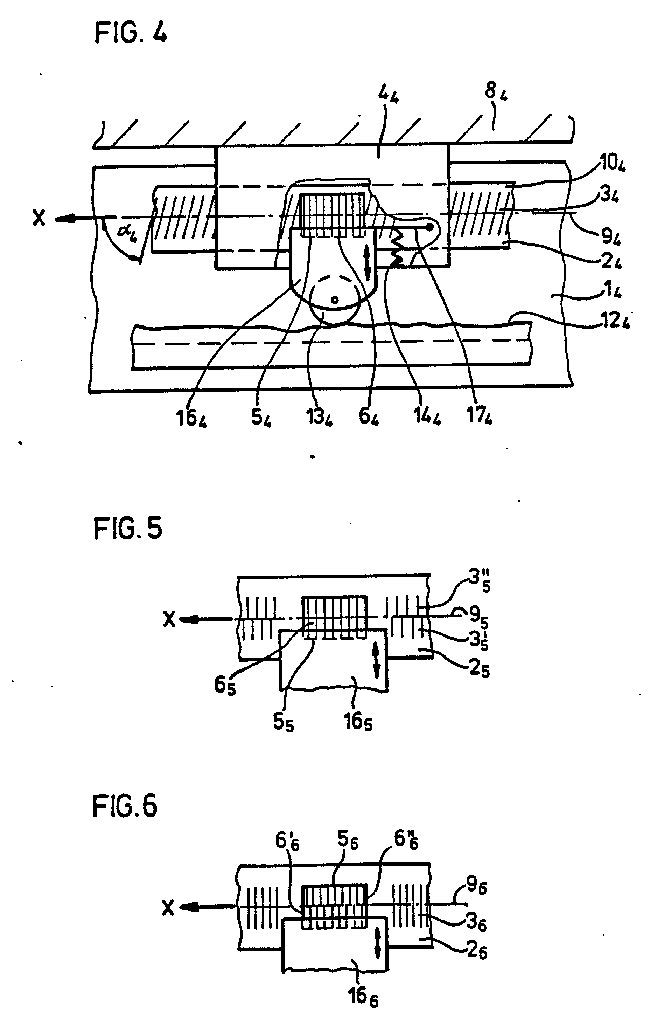

In Figur 4 ist in einer Ansicht ein Längenmeßsystem dargestellt, bei dem an einem Bett $1_4$ einer nicht gezeigten Maschine ein Maßstab $2_4$ in beliebiger Weise befestigt ist, dessen Teilung $3_4$ von einer Abtasteinheit $4_4$ mittels einer Abtastplatte $5_4$ mit einer Teilung $6_4$

abgetastet wird; die Abtasteinheit $4_4$ ist starr an einem Schlitten $8_4$ der Maschine befestigt. Zur Fehlerkorrektur verlaufen die Teilung $6_4$ der Abtastplatte $5_4$ senkrecht und die Teilung $3_4$ des Maßstabs $2_4$ unter einem Winkel $\alpha_4$ kleiner 90° zur Teilungsachse $9_4$ der Teilung $3_4$; zur partiellen Abdeckung der Teilung $3_4$ des Maßstabs $2_4$ bzw. der Teilung $6_4$ der Abtastplatte $5_4$ ist eine Blende $16_4$ an einem Hebel $17_4$ schwenkbar in der Abtasteinheit $4_4$ gelagert. Zur Schwenkung der Blende $16_4$ ist neben dem Maßstab $2_4$ auf dem Bett $1_4$ ein Fehlerkorrekturprofil $12_4$ befestigt, das von einer mit der Blende $16_4$ verbundenen Rolle $13_4$ unter der Wirkung einer Zugfeder $14_4$ abgetastet wird. Beim Meßvorgang wird infolge der partiellen Abdeckung der Teilung $3_4$ bzw. der Teilung $6_4$ auf einer Seite der Teilungsachse $9_4$ die Teilung $3_4$ des Maßstabs $2_4$ auf beiden Seiten der Teilungsachse $9_4$ mit unterschiedlicher Gewichtung abgetastet, so daß sich eine Meßwertkorrektur gemäß dem Fehlerverlauf in Meßrichtung X ergibt.

In Figur 5 ist als Ausschnitt eines Längenmeßsystems gemäß Figur 4 lediglich ein Maßstab $2_5$ mit einer Teilung $3_5$ gezeigt, die von einer Abtastplatte $5_5$ mit einer Teilung $6_5$ abgetastet wird. Zur Fehlerkorrektur verlaufen die Teilung $6_5$ und die Teilung $3_5$ senkrecht zur Teilungsachse $9_5$ der Teilung $3_5$; die Teilung $3_5$ besteht aus zwei Teilungen $3_5'$, $3_5''$, die auf beiden Seiten der Teilungsachse $9_5$ um einen bestimmten Betrag in Meßrichtung X gegeneinander versetzt sind. Zur variablen partiellen Abdeckung der Teilung $3_5'$ des Maßstabs $2_5$ bzw. der Teilung $6_5$ der Abtastplatte $5_5$ ist eine Blende 16 vorgesehen. Beim Meßvorgang wird infolge der partiellen Abdeckung der Teilung $3_5'$ bzw. der Teilung $6_5$ auf einer Seite der Teilungsachse $9_5$ die Teilung $3_5$ des Maßstabs $2_5$ auf beiden Seiten der Teilungsachse $9_5$ mit unterschiedlicher Gewichtung abgetastet, so daß sich eine Meßwertkorrektur gemäß dem Fehlerverlauf in Meßrichtung X ergibt.

In Figur 6 ist als Ausschnitt eines Längenmeßsystems gemäß Figur 4 lediglich ein Maßstab $2_6$ mit einer Teilung $3_6$ gezeigt, die von einer Abtastplatte $5_6$ mit einer Teilung $6_6$ abgetastet wird. Zur Fehlerkorrektur verlaufen die Teilung $3_6$ und die Teilung $6_6$ senkrecht zur Teilungsachse $9_6$ der Teilung $3_6$; die Teilung $6_6$ besteht aus zwei Teilungen $6_6'$, $6_6''$, die auf beiden Seiten der Teilungsachse $9_6$ um einen bestimmten Betrag in Meßrichtung X gegeneinander versetzt sind. Zur variablen partiellen Abdeckung der Teilung $3_6$ des Maßstabs $2_6$ bzw. der Teilung $6_6'$ der Abtastplatte $5_6$ ist eine Blende $16_6$ vorgesehen. Beim Meßvorgang wird infolge der partiellen Abdeckung der Teilung $3_6$ bzw. der Teilung $6_6'$ auf einer Seite der Teilungsachse $9_6$ die Teilung $3_6$ des Maßstabs $2_6$ auf beiden Seiten der Teilungsachse $9_6$ mit unterschiedlicher Gewichtung abgetastet, so daß sich eine Meßwertkorrektur gemäß dem Fehlerverlauf in Meßrichtung X ergibt.

Zur partiellen Abdeckung der Teilungen des Maßstabs bzw. der Abtastplatte können auch auf beiden Seiten der Teilungsachse der Teilung des Maßstabs jeweils eine Blende vorgesehen sein.

Zur Änderung der Korrektur können die Stellglieder 15 und das Fehlerkorrekturprofil 12 verstellbar sein.

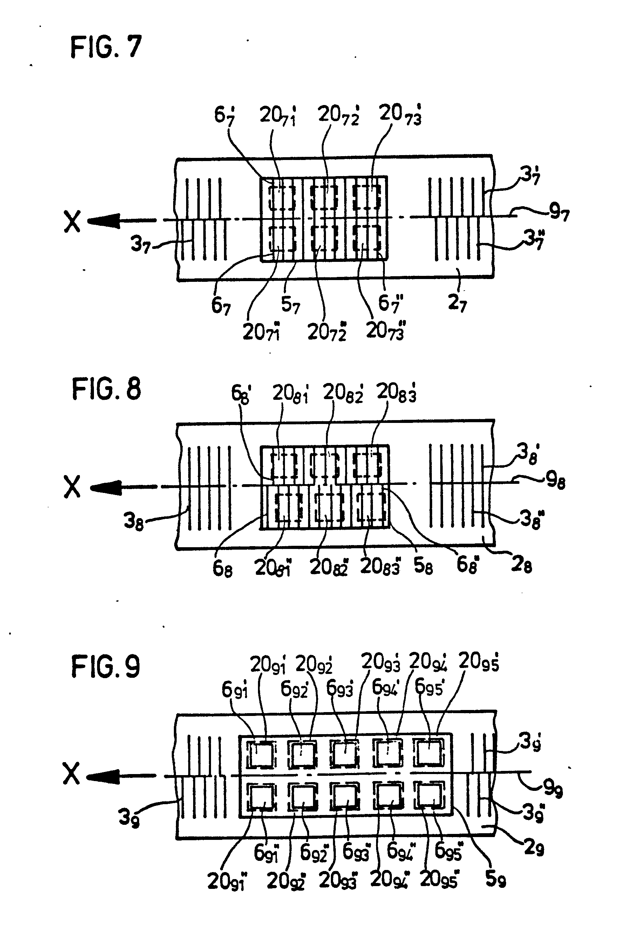

In Figur 7 ist von einem Längenmeßsystem lediglich ein Maßstab $2_7$ mit einer Teilung $3_7$ gezeigt, die von einer Abtastplatte $5_7$ mit einer Teilung $6_7$ abgetastet wird. Im gezeigten Beispiel verlaufen die Teilung $3_7$ und die Teilung $6_7$ senkrecht zur Teilungsachse $9_7$ der Teilung $3_7$; die Teilung $3_7$ besteht aus zwei Teilungen $3_7'$, $3_7''$, die auf beiden Seiten der Teilungsachse $9_7$ um einen bestimmten Betrag in Meßrichtung X gegeneinander versetzt sind, wogegen die Teilung $6_7$ aus zwei Teilungen $6_7'$, $6_7''$ besteht, die auf beiden Seiten der Teilungsachse $9_7$ keinen gegenseitigen Versatz aufweisen. Den Teilungen $6_7'$, $6_7''$ sind jeweils drei in Meßrichtung X hintereinander angeordnete Photoelemente $20_{71}'$, $20_{72}'$, $20_{73}'$, $20_{71}''$, $20_{72}''$, $20_{73}''$ zugeordnet; die Photoelemente $20_{71}'$, $20_{72}'$, $20_{73}'$ weisen gegenüber den Photoelementen $20_{71}''$, $20_{72}''$, $20_{73}''$ keinen gegenseitigen Versatz auf. In einer nicht gezeigten Auswerteeinrichtung des Längenmeßsystems werden aus den Ausgangssignalen der Photoelemente $20_{71}'$, $20_{72}'$, $20_{73}'$ ein erstes Summensignal und aus den Ausgangssignalen der Photoelemente $20_{71}''$, $20_{72}''$, $20_{73}''$ ein zweites Summensignal gebildet.

Je nachdem, welche der Ausgangssignale der Photoelemente $20_7'$ bzw. der Photoelemente $20_7''$ zur Summenbildung für das erste Summensignal bzw. für das zweite Summensignal herangezogen werden, erfolgt eine Abtastung der Teilungen $3_7'$, $3_7''$ auf beiden Seiten der Teilungsachse $9_7$ mit unterschiedlicher Gewichtung, so daß sich eine Meßwertkorrektur gemäß dem Fehlerverlauf in Meßrichtung X ergibt.

In Figur 8 ist von einem Längenmeßsystem lediglich ein Maßstab $2_8$ mit einer Teilung $3_8$ gezeigt, die von einer Abtastplatte $5_8$ mit einer Teilung $6_8$ abgetastet wird. Im gezeigten Beispiel verlaufen die Teilung $3_8$ und die Teilung $6_8$ senkrecht zur Teilungsachse $9_8$ der Teilung $3_8$; die Teilung $6_8$ besteht aus zwei Teilungen $6_8'$, $6_8''$, die auf beiden Seiten der Teilungsachse $9_8$ um einen bestimmten Betrag in Meßrichtung X gegeneinander versetzt sind, wogegen die Teilung $3_8$ aus zwei Teilungen $3_8'$, $3_8''$ besteht, die auf beiden Seiten der Teilungsachse $9_8$ keinen gegenseitigen Versatz aufweisen. Den Teilungen $6_8'$, $6_8''$ sind jeweils drei in Meßrichtung X hintereinander angeordnete Photoelemente $20_{81}'$, $20_{82}'$, $20_{83}'$, $20_{81}''$, $20_{82}''$, $20_{83}''$ zugeordnet; die Photoelemente $20_{81}'$, $20_{82}'$, $20_{83}'$ sind gegenüber den Photoelementen $20_{81}''$, $20_{82}''$, $20_{83}''$ um den gleichen Betrag in Meßrichtung X gegeneinander versetzt wie die Teilungen $6_8'$, $6_8''$. In einer nicht gezeigten Auswerteeinrichtung des Längenmeßsystems werden aus den Ausgangssignalen der Photoelemente $20_{81}'$, $20_{82}'$,

$20_{83}'$ ein erstes Summensignal und aus den Ausgangssignalen der Photoelemente $20_{81}''$, $20_{82}''$, $20_{83}''$ ein zweites Summensignal gebildet. Je nachdem, welche der Ausgangssignale der Photoelemente $20_8'$ bzw. der Photoelemente $20_8''$ zur Summenbildung für das erste Summensignal bzw. für das zweite Summensignal herangezogen werden, erfolgt eine Abtastung der Teilungen $3_8'$, $3_8''$ auf beiden Seiten der Teilungsachse $9_8$ mit unterschiedlicher Gewichtung, so daß sich eine Meßwertkorrektur gemäß dem Fehlerverlauf in Meßrichtung X ergibt.

In Figur 9 ist von einem Längenmeßsystem lediglich ein Maßstab $2_9$ mit einer Teilung $3_9$ gezeigt, die von einer Abtastplatte $5_9$ mit einer Teilung $6_9$ abgetastet wird. Im gezeigten Beispiel verlaufen die Teilung $3_9$ und die Teilung $6_9$ senkrecht zur Teilungsachse $9_9$ der Teilung $3_9$; die Teilung $3_9$ besteht aus zwei Teilungen $3_9'$, $3_9''$, die auf beiden Seiten der Teilungsachse $9_9$ um einen bestimmten Betrag in Meßrichtung X gegeneinander versetzt sind, wogegen die Teilung $6_9$ aus zwei Reihen von jeweils fünf in Meßrichtung X hintereinander angeordneten Teilungsfeldern $6_{91}'$ - $6_{95}'$, $6_{91}''$ - $6_{95}''$ besteht, die auf beiden Seiten der Teilungsachse $9_9$ keinen gegenseitigen Versatz aufweisen. Den Teilungsfeldern $6_{91}'$ - $6_{95}'$, $6_{91}''$-$6_{95}''$, sind jeweils Photoelemente $20_{91}'$ - $20_{95}'$, $20_{91}''$ - $20_{95}''$ zugeordnet. In einer nicht gezeigten Auswerteeinrichtung des Längenmeßsystems werden aus den Ausgangssignalen der Photoelemente $20_{91}'$ - $20_{95}'$ ein erstes Summensignal und aus den Ausgangssignalen der Photoelemente $20_{91}''$ - $20_{95}''$ ein zweites Summensignal gebildet. Je nachdem, welche der Ausgangssignale der Photoelemente $20_9'$ bzw. der Photoelemente $20_9''$ zur Summenbildung für das erste Summensignal bzw. für das zweite Summensignal herangezogen werden, erfolgt eine Abtastung der Teilungen $3_9'$, $3_9''$ auf beiden Seiten der Teilungsachse $9_9$ mit unterschiedlicher Gewichtung, so daß sich eine Meßwertkorrektur gemäß dem Fehlerverlauf in Meßrichtung X ergibt.

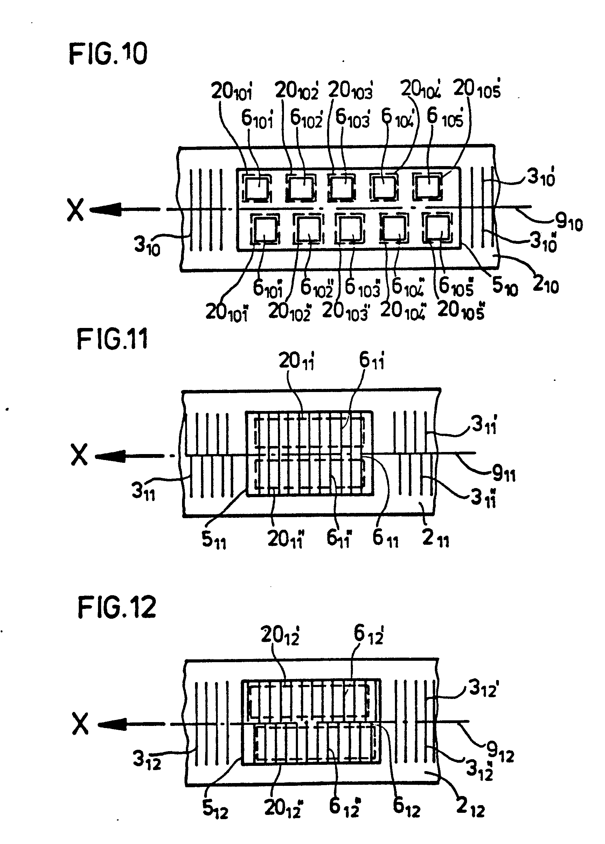

In Figur 10 ist von einem Längenmeßsystem lediglich ein Maßstab $2_{10}$ mit einer Teilung $3_{10}$ gezeigt, die von einer Abtastplatte $5_{10}$ mit einer Teilung $6_{10}$ abgetastet wird. Im gezeigten Beispiel verlaufen die Teilung $3_{10}$ und die Teilung $6_{10}$ senkrecht zur Teilungsachse $9_{10}$ der Teilung $3_{10}$; die Teilung $6_{10}$ besteht aus zwei Reihen von jeweils fünf in Meßrichtung X hintereinander angeordneten Teilungsfeldern $6_{101}'$ - $6_{105}'$, $6_{101}''$ - $6_{105}''$, die auf beiden Seiten der Teilungsachse $9_{10}$ um einen bestimmten Betrag gegeneinander versetzt sind, wogegen die Teilung $3_{10}$ aus zwei Teilungen $3_{10}'$, $3_{10}''$ besteht, die auf beiden Seiten der Teilungsachse $9_{10}$ keinen gegenseitigen Versatz aufweisen. Den Teilungsfeldern $6_{101}'$ - $6_{105}'$, $6_{101}''$ - $6_{105}''$ sind jeweils Photoelemente $20_{101}'$ - $20_{105}'$, $20_{101}''$ - $20_{105}''$ zugeordnet. In einer nicht gezeigten Auswerteeinrichtung des Längenmeßsystems werden aus den Ausgangssignalen der Photoelemente $20_{101}'$ -

$20_{105}'$ ein erstes Summensignal und aus den Ausgangssignalen der Photoelemente $20_{101}''$ - $20_{105}''$ ein zweites Summensignal gebildet. Je nachdem, welche der Ausgangssignale der Photoelemente $20_{10}'$ bzw. der Photoelemente $20_{10}''$ zur Summenbildung für das erste Summensignal bzw. für das zweite Summensignal herangezogen werden, erfolgt eine Abtastung der Teilungen $3_{10}'$, $3_{10}''$ auf beiden Seiten der Teilungsachse $9_{10}$ mit unterschiedlicher Gewichtung so daß sich eine Meßwertkorrektur gemäß dem Fehlerverlauf in Meßrichtung X ergibt.

Die Auswahl der für die Summenbildung der beiden Summensignale jeweils benötigten Ausgangssignale der Photoelemente 20 kann beispielsweise von einem Rechner in der Auswerteeinheit erfolgen und zwar aufgrund von in einem Speicher abgespeicherten Korrekturwerten gemäß dem Fehlerverlauf in Meßrichtung X. Aus den beiden Summensignalen werden sodann Positionsmeßwerte gebildet.

In Figur 11 ist von einem Längenmeßsystem lediglich ein Maßstab $2_{11}$ mit einer Teilung $3_{11}$ gezeigt, die von einer Abtastplatte $5_{11}$ mit einer Teilung $6_{11}$ abgetastet wird. Im gezeigten Beispiel verlaufen die Teilung $3_{11}$ und die Teilung $6_{11}$ senkrecht zur Teilungsachse $9_{11}$ der Teilung $3_{11}$; die Teilung $3_{11}$ besteht aus zwei Teilungen $3_{11}'$, $3_{11}''$, die auf beiden Seiten der Teilungsachse $9_{11}$ um einen bestimmten Betrag in Meßrichtung X gegeneinander versetzt sind, wogegen die Teilung $6_{11}$ aus zwei Teilungen $6_{11}'$, $6_{11}''$ besteht, die auf beiden Seiten der Teilungsachse $9_{11}$ keinen gegenseitigen Versatz aufweisen. Den Teilungen $6_{11}'$, $6_{11}''$ ist jeweils ein Photoelement $20_{11}'$, $20_{11}''$ zugeordnet; die Photoelement $20_{11}'$ weist gegenüber dem Photoelement $20_{11}''$ keinen Versatz auf. In einer nicht gezeigten Auswerteeinrichtung des Längenmeßsystems werden die Amplituden der Ausgangssignale der Photoelemente $20_{11}'$, $20_{11}''$ beispielsweise mittels eines Widerstandsnetzwerkes derart variiert, daß eine Abtastung der Teilungen $3_{11}'$, $3_{11}''$ auf beiden Seiten der Teilungsachse $9_{11}$ mit unterschiedlicher Gewichtung erfolgt, so daß sich eine Meßwertkorrektur gemäß dem Fehlerverlauf in Meßrichtung X ergibt.

In Figur 12 ist von einem Längenmeßsystem lediglich ein Maßstab $2_{12}$ mit einer Teilung $3_{12}$ gezeigt, die von einer Abtastplatte $5_{12}$ mit einer Teilung $6_{12}$ abgetastet wird. Im gezeigten Beispiel verlaufen die Teilung $3_{12}$ und die Teilung $6_{12}$ senkrecht zur Teilungsachse $9_{12}$ der Teilung $3_{12}$; die Teilung $6_{12}$ besteht aus zwei Teilungen $6_{12}'$, $6_{12}''$, die auf beiden Seiten der Teilungsachse $9_{12}$ um einen bestimmten Betrag in Meßrichtung X gegeneinander versetzt sind, wogegen die Teilung $3_{12}$ aus zwei Teilungen $3_{12}'$, $3_{12}''$ besteht, die auf beiden Seiten der Teilungsachse $9_{12}$ keinen gegenseitigen Versatz aufweisen. Den Teilungen $6_{12}'$, $6_{12}''$ ist jeweils ein Photoelement $20_{12}'$, $20_{12}''$ zugeordnet; das Photoelement $20_{12}'$ ist gegenüber dem Photoelement $20_{12}''$ um den gleichen Betrag in Meßrichtung X versetzt wie

die Teilungen $6_{12}'$, $6_{12}''$. In einer nicht gezeigten Auswerteeinrichtung des Längenmeßsystems werden die Amplituden der Ausgangssignale der Photoelemente $20_{12}'$, $20_{12}''$ beispielsweise mittels eines Widerstandsnetzwerkes derart variiert, daß eine Abtastung der Teilungen $3_{12}'$, $3_{12}''$ auf beiden Seiten der Teilungsachse $9_{12}$ mit unterschiedlicher Gewichtung erfolgt, so daß sich eine Meßwertkorrektur gemäß dem Fehlerverlauf in Meßrichtung X ergibt.

Die Steuerung des Widerstandsnetzwerkes kann beispielsweise von einem Rechner in der Auswerteeinrichtung erfolgen und zwar aufgrund von in einem Speicher abgespeicherten Korrekturwerten gemäß dem Fehlerverlauf in Meßrichtung X. Aus den beiden Ausgangssignalen mit entsprechend variierten Amplituden werden anschließend Positionsmeßwerte gebildet.

Die Teilungen $3_7$ - $3_{12}$ und die Teilungen $6_7$ - $6_{12}$ können anstatt senkrecht auch schräg zu den Teilungsachsen $9_7$ - $9_{12}$ verlaufen. Die Teilungen $3_7$ - $3_{12}$ können zur Moiré-Abtastung auch mit den Teilungen $6_7$ - $6_{12}$ einen Winkel einschließen. Die Anzahl der Photoelemente $20_7$ - $20_{10}$ kann beliebig groß sein; je größer diese Anzahl ist, um so feinere Korrekturen werden ermöglicht.

Üblicherweise werden in inkrementalen Meßsystemen zur Richtungsdiskriminierung der Meßbewegung und zur Eliminierung der Gleichspannungsanteile der Ausgangssignale der Photoelemente vier jeweils um 90° zueinander versetzte Ausgangssignale durch entsprechend angeordnete Teilungsfelder auf der Abtastplatte bzw. den zugeordneten Photoelementen erzeugt. Das vorgehend Beschriebene muß dann auf die vier Abtastfelder bzw. auf die vier Photoelemente angewandt werden.

Die Erfindung ist nicht auf lichtelektrische Meßsysteme beschränkt, sondern auch bei optischen, magnetischen, induktiven und kapazitiven Meßsystemen einsetzbar.

**Patentansprüche**

1. Längen- oder Winkelmeßsystem mit einer Einrichtung zur Korrektur von Fehlern, insbesondere von Teilungsfehlern und/oder Maschinenfehlern, und mit einer die Teilung (3) einer Maßverkörperung (2) abtastenden Abtasteinheit (4), wobei die Abtasteinheit (4) und die Maßverkörperung (2) mit zu messenden, relativ zueinander verschieblichen Objekten (1, 8) verbunden sind und die Teilung (3) auf beiden Seiten der in Meßrichtung X verlaufenden Teilungsachse (9) mit unterschiedlicher Gewichtung gemäß dem Fehlerverlauf von der Abtasteinheit (4) abtastbar ist, dadurch gekennzeichnet, daß die Erzielung der unterschiedlichen Gewichtung einmal auf mechanischem Wege durch Verlagerung der Abtasteinheit (4) oder nur eines Abtastelements (5) derselben im wesentlichen quer zur Teilungsachse (9) der Teilung (3) und/oder durch Mittel (16) zur partiellen Abdeckung der Teilung (3, 6) im Bereich der Abtasteinheit (4) oder zum anderen auf elektrischem Wege durch unterschiedliche Auswertung von Abtastsignalen der Abtasteinheit (4) auf beiden Seiten der Teilungsachse (9) erfolgt, so daß die Fehlerkorrektur der gebildeten Meßwerte durch diese unterschiedlich gewichtete Abtastung gemäß dem Fehlerverlauf bewirkt wird.

2. Meßsystem nach Anspruch 1, dadurch gekennzeichnet, daß die Teilung ($3_4$ - $3_6$) der Maßverkörperung ($2_4$ - $2_6$) bzw. die Teilung ($6_4$ - $6_6$) des Abtastelements ($5_4$ - $5_6$) auf wenigstens einer Seite der Teilungsachse ($9_4$ - $9_6$) partiell abgedeckt ist.

3. Meßsystem nach Anspruch 1, dadurch gekennzeichnet, daß die Teilungen ($3_7'$ - $3_{10}'$, $3_7''$ - $3_{10}''$) der Maßverkörperung ($2_7$ - $2_{10}$) auf jeder Seite der Teilungsachse ($9_7$ - $9_{10}$) von wenigstens zwei Photoelementen ($20_7'$ - $20_{10}'$, $20_7''$ - $20_{10}''$) abgetastet werden und daß die Ausgangssignale der Photoelemente ($20_7'$ - $20_{10}'$, $20_7''$ - $20_{10}''$) auf jeder Seite der Teilungsachse ($9_7$ - $9_{10}$) partiell zur Summenbildung für jeweils ein Summensignal herangezogen werden.

4. Meßsystem nach Anspruch 1, dadurch gekennzeichnet, daß die Teilungen ($3_{11}'$, $3_{11}''$, $3_{12}'$, $3_{12}''$) der Maßverkörperung ($2_{11}$, $2_{12}$) auf jeder Seite der Teilungsachse ($9_{11}$, $9_{12}$) von einem einzigen Photoelement ($20_{11}'$, $20_{11}''$, $20_{12}'$, $20_{12}''$ abgetastet werden und daß das Ausgangssignal des Photoelements ($20_{11}'$, $20_{11}''$, $20_{12}'$, $20_{12}''$) auf jeder Seite der Teilungsachse ($9_{11}$, $9_{12}$) in seiner Amplitudenhöhe variiert wird.

5. Meßsystem nach Anspruch 1, dadurch gekennzeicnet, daß die Teilung ($3_1$) der Maßverkörperung ($2_1$) unter einem Winkel $\alpha_1$ kleiner 90° zur Teilungsachse ($9_1$) verläuft und daß die Abtasteinheit ($4_1$) oder das Abtastelement ($5_1$) parallel zur Teilungsebene ($10_1$) der Maßverkörperung ($2_1$) senkrecht zur Teilungsachse ($9_1$) verschiebbar ist.

6. Meßsystem nach Anspruch 1, dadurch gekennzeichnet, daß die Teilung ($3_2$ ) der Maßverkörperung ($2_2$) senkrecht zur Teilungsachse ($9_2$) verläuft und daß die Abtasteinheit ($4_2$) oder das Abtastelement ($5_2$) parallel zur Teilungsebene ($10_2$) der Maßverkörperung ($2_2$) unter einem Winkel $\alpha_2$ kleiner 90° quer zur Teilungsachse ($9_2$) verschiebbar ist.

7. Meßsystem nach Anspruch 1, dadurch gekennzeichnet, daß die Teilungen ($3_3'$, $3_3''$) der Maßverkörperung ($2_3$) senkrecht zur Teilungsachse ($9_3$) verlaufen und auf beiden Seiten der Teilungsachse ($9_3$) um einen bestimmten Betrag in Meßrichtung X gegeneinander versetzt sind und daß die Abtasteinheit ($4_3$) oder das Abtastelement ($5_3$) parallel zur Teilungsebene ($10_3$) der Maßverkörperung ($2_3$) senkrecht zur Teilungsachse ($9_3$) verschiebbar ist.

8. Meßsystem nach Anspruch 2, dadurch gekennzeichnet, daß die Teilung ($3_4$) der

Maßverkörperung ($2_4$) unter einem Winkel $\alpha_4$ kleiner 90° zur Teilungsachse ($9_4$) verläuft.

9. Meßsystem nach Anspruch 2, dadurch gekennzeichnet, daß die Teilungen ($3_5'$, $3_5''$) der Maßverkörperung ($2_5$) senkrecht zur Teilungsachse ($9_5$) verlaufen und auf beiden Seiten der Teilungsachse ($9_5$) um einen bestimmten Betrag in Meßrichtung X gegeneinander versetzt sind.

10. Meßsystem nach Anspruch 2, dadurch gekennzeichnet, daß die Teilung ($3_6$) der Maßverkörperung ($2_6$) senkrecht zur Teilungsachse ($9_6$) verläuft und daß das Abtastelement ($5_6$) auf jeder Seite der Teilungsachse ($9_6$) wenigstens eine Teilung ($6_6'$, $6_6''$) aufweist, die um einen bestimmten Betrag in Meßrichtung X gegeneinander versetzt sind.

11. Meßsystem nach Anspruch 3, dadurch gekennzeichnet, daß die wenigstens zwei Photoelemente ($20_7'$, $20_7''$, $20_8'$, $20_8''$) auf jeder Seite der Teilungsachse ($9_7$, $9_8$) einer einzigen Teilung ($6_7'$, $6_7''$, $6_8'$, $6_8''$) des Abtastelements ($5_7$, $5_8$) zugeordnet sind.

12. Meßsystem nach Anspruch 3 dadurch gekennzeichnet, daß jedes Photoelement ($20_9'$, $20_9''$, $20_{10}'$, $20_{10}''$) auf jeder Seite der Teilungsachse ($9_9$, $9_{10}$) einem gesonderten Teilungsfeld ($6_9'$, $6_9''$, $6_{10}'$, $6_{10}''$) des Abtastelements ($5_9$, $5_{10}$) zugeordnet ist.

13. Meßsystem nach Anspruch 4, dadurch gekennzeichnet, daß das Photoelement ($20_{11}'$, $20_{11}''$, $20_{12}'$, $20_{12}''$) auf jeder Seite der Teilungsachse ($9_{11}$, $9_{12}$) einer einzigen Teilung ($6_{11}'$, $6_{11}''$, $6_{12}'$, $6_{12}''$) des Abtastelements ($5_{11}$, $5_{12}$) zugeordnet ist.

14. Meßsystem nach den Ansprüchen 3 und 4, dadurch gekennzeichnet, daß entweder die Teilungen ($3_7'$, $3_7''$, $3_9'$, $3_9''$, $3_{11}'$, $3_{11}''$) der Maßverkörperungen ($2_7$, $2_9$, $2_{11}$) oder die Teilungen ($6_8'$, $6_8''$, $6_{12}'$, $6_{12}''$) bzw. die Teilungsfelder ($6_{10}'$, $6_{10}''$) der Abtastelemente ($5_8$, $5_{10}$, $5_{12}$) um einen bestimmten Betrag in Meßrichtung X gegeneinander versetzt sind.

15. Meßsystem nach Anspruch 1, dadurch gekennzeichnet, daß der Maßverkörperung (2) ein Fehlerkorrekturprofil (12) zugeordnet ist, das von einem Übertragungselement (13) zur Verschiebung der Abtasteinheit (4) oder des Abtastelements (5) oder einer Blende (16) abgetastet wird.

16. Meßsystem nach Anspruch 1, dadurch gekennzeichnet, daß der Maßverkörperung (2) Stellglieder (15) zur Verschiebung der Abtasteinheit (4) oder des Abtastelements (5) oder einer Blende zugeordnet sind.

17. Meßsystem nach Anspruch 15, dadurch gekennzeichnet, daß das Übertragungselement (13) von einer Rolle gebildet ist.

## Claims

1. Length-measuring or angle-measuring system having a device for the correction of errors, in particular of graduation errors and/or machine errors, and having a scanning unit (4) scanning the graduation (3) of a measure (2), the scanning unit (4) and the measure (2) being connected to objects (1, 8) which are to be measured and which are displaceable relative to one another, and the graduation (3) being capable of being scanned on both sides of the graduation axis (9) extending in measurement direction X with differing weighting according to the error progression by the scanning unit (4), characterized in that the differing weighting is achieved in one instance by mechanical means by displacement of the scanning unit (4) or only of a scanning element (5) of the same substantially transversely to the graduation axis (9) of the graduation (3) and/or by means (16) for partially covering the graduation (3, 6) in the region of the scanning unit (4) or, on the other hand, by electrical means, by differing evaluation of scanning signals of the scanning unit (4) on the two sides of the graduation axis (9), so that the error correction of the measurement values formed is undertaken by this differently weighted scanning in accordance with the error progression.

2. Measuring system according to Claim 1, characterized in that the graduation ($3_4$ - $3_6$) of the measure ($2_4$ - $2_6$) or the graduation ($6_4$ - $6_6$) of the scanning element ($5_4$ - $5_6$) is partially covered on at least one side of the graduation axis ($9_4$ - $9_6$).

3. Measuring system according to Claim 1, characterized in that the graduations ($3_7'$ - $3_{10}'$, $3_7''$ - $3_{10}''$) of the measure ($2_7$ - $2_{10}$) are scanned on each side of the graduation axis ($9_7$ - $9_{10}$) by at least two photoelectric elements ($20_7'$ - $20_{10}'$, $20_7''$ - $20_{10}''$), and in that the output signals of the photoelectric elements ($20_7'$-$20_{10}'$, $20_7''$ - $20_{10}''$) on each side of the graduation axis ($9_7$ - $9_{10}$) are partially utilized for sum formation for a respective sum signal.

4. Measuring system according to Claim 1, characterized in that the graduations ($3_{11}'$, $3_{11}''$, $3_{12}'$, $3_{12}''$) of the measure ($2_{11}$, $2_{12}$) are scanned on each side of the graduation axis ($9_{11}$, $9_{12}$) by a single photoelectric element ($20_{11}'$, $20_{11}''$, $20_{12}'$, $20_{12}''$), and in that the output signal of the photoelectric element ($20_{11}'$, $20_{11}''$, $20_{12}'$, $20_{12}''$) on each side of the graduation axis ($9_{11}$, $9_{12}$) is varied in the magnitude of its amplitude.

5. Measuring system according to Claim 1, characterized in that the graduation ($3_1$) of the measure ($2_1$) extends at an angle $\alpha_1$ smaller than 90° to the graduation axis ($9_1$), and in that the scanning unit ($4_1$) or the scanning element ($5_1$) is displaceable parallel to the graduation plane ($10_1$) of the measure ($2_1$) perpendicular to the graduation axis ($9_1$).

6. Measuring system according to Claim 1, characterized in that the graduation ($3_2$) of the measure ($2_2$) extends perpendicular to the graduation axis ($9_2$), and in that the scanning unit ($4_2$) or the scanning element ($5_2$) is displaceable parallel to the graduation plane ($10_2$) of the

measure ($2_2$) at an angle $\alpha_2$ smaller than 90° transversely to the graduation axis ($9_2$).

7. Measuring system according to Claim 1, characterized in that the graduations ($3_3'$, $3_3''$) of the measure ($2_3$) extend perpendicular to the graduation axis ($9_3$) and are mutually offset on the two sides of the graduation axis ($9_3$) by a specified amount in the measurement direction X, and in that the scanning unit ($4_3$) or the scanning element ($5_3$) is displaceable parallel to the graduation plane ($10_3$) of the measure ($2_3$) perpendicular to the graduation axis ($9_3$).

8. Measuring system according to Claim 2, characterized in that the graduation ($3_4$) of the measure ($2_4$) extends at an angle $\alpha_4$ smaller than 90° to the graduation axis ($9_4$).

9. Measuring system according to Claim 2, characterized in that the graduations ($3_5'$, $3_5''$) of the measure ($2_5$) extend perpendicular to the graduation axis ($9_5$) and are mutually offset on the two sides of the graduation axis ($9_5$) by a specified amount in the measurement direction X.

10. Measuring system according to Claim 2, characterized in that the graduation ($3_6$) of the measure ($2_6$) extends perpendicular to the graduation axis ($9_6$), and in that the scanning element ($5_6$) on each side of the graduation axis ($9_6$) exhibits at least one graduation ($6_6'$, $6_6''$), such graduations being mutually offset by a specified amount in the measurement direction X.

11. Measuring system according to Claim 3, characterized in that the at least two photoelectric elements ($20_7'$, $20_7''$, $20_8'$, $20_8''$) on each side of the graduation axis ($9_7$, $9_8$) are associated with a single graduation ($6_7'$, $6_7''$, $6_8'$, $6_8''$) of the scanning element ($5_7$, $5_8$).

12. Measuring system according to Claim 3, characterized in that each photoelectric element ($20_9'$, $20_9''$, $20_{10}'$, $20_{10}''$) on each side of the graduation axis ($9_9$, $9_{10}$) is associated with a separate graduation field ($6_9'$, $6_9''$, $6_{10}'$, $6_{10}''$) of the scanning element ($5_9$, $5_{10}$).

13. Measuring system according to Claim 4, characterized in that the photoelectric element ($20_{11}'$, $20_{11}''$, $20_{12}'$, $20_{12}''$) on each side of the graduation axis ($9_{11}$, $9_{12}$) is associated with a single graduation ($6_{11}'$, $6_{11}''$, $6_{12}'$, $6_{12}''$) of the scanning element ($5_{11}$, $5_{12}$).

14. Measuring system according to Claims 3 and 4, characterized in that either the graduations ($3_7'$, $3_7''$, $3_9'$, $3_9''$, $3_{11}'$, $3_{11}''$) of the measures ($2_7$, $2_9$, $2_{11}$) or the graduations ($6_8'$, $6_8''$, $6_{12}'$, $6_{12}''$) or the graduation fields ($6_{10}'$, $6_{10}''$) of the scanning elements ($5_8$, $5_{10}$, $5_{12}$) are mutually offset by a specified amount in the measurement direction X.

15. Measuring system according to Claim 1, characterized in that an error correction profile (12) is associated with the measure (2), which error correction profile is scanned by a transmission element (13) for the displacement of the scanning unit (4) or of the scanning element (5) or of a shield (16).

16. Measuring system according to Claim 1, characterized in that setting elements (15) for the dispacement of the scanning unit (4) or of the scanning element (5) or of a shield are associated with the measure (2).

17. Measuring system according to Claim 15, characterized in that the transmission element (13) is formed by a roller.

## Revendications

1. Système de mesure de longueurs ou d'angles comprenant un dispositif pour la correction d'erreurs, en particulier des erreurs de division et/ou des erreurs de machine, et une unité d'exploration (4) explorant la division (3) d'une régle de mesure (2), l'unité, d'exploration (4) et la règle de mesure (2) étant reliées à des objet (1, 8) à mesurer, déplaçable l'un par rapport à l'autre, et la division (3) étant explorée par l'unité d'exploration (4), sur les deux côtés de l'axe de division (9) s'étendant dans la direction de mesure X, avec des poids différents selon l'allure des erreurs, caractérisé par le fait que l'obtention des poids différents s'effectue d'une part par voie mécanique par décalage de l'unité d'exploration (4) ou d'un élément d'exploration (5) seulement de cette unité, de façon essentiellement transversale à l'axe de division (9) de la division (3) et/ou par des moyens (16) pour le recouvrement partiel de la division (3, 6) dans la zone de l'unité d'exploration (4) et d'autre part par voie électrique par des exploitations différentes de signaux d'exploration de l'unité d'exploration (4) sur les deux côtés de l'axe de division (9), de manière que la correction des erreurs de valeurs mesurées soit produite par cette exploration avec des poids différents selon l'allure des erreurs.

2. Système de mesure suivant la revendication 1, caractérisé par le fait que la division ($3_4$ - $3_6$) de la régle de mesure ($2_4$-$2_6$) ou la division ($6_4$ - $6_6$) de l'élément d'exploration ($5_4$-$5_6$) est partiellement recouverte au moins sur un côté de l'axe de division ($9_4$ - $9_6$).

3. Système de mesure suivant la revendication 1, carastérisé par le fait que les divisions ($3_7'$ - $3_{10}'$, $3_7''$ - $3_{10}''$) de la règle de mesure ($2_7$ - $2_{10}$) sont explorées sur chaque côté de l'axe de division ($9_7$ - $9_{10}$) par au moins deux éléments photoélectriques ($20_7'$ - $20_{10}'$, $20_7''$ - $20_{10}''$) et que les signaux de sortie des éléments photoélectriques ($20_7'$ - $20_{10}'$, $20_7''$ - $20_{10}''$) sur chaque côté de l'axe de division ($9_7$ - $9_{10}$) sont utilisés partiellement pour la formation de somme pour chaque fois un signal de somme.

4. Système de mesure suivant la revendication 1, caractérisé par le fait que les divisions ($3_{11}'$, $3_{11}''$, $3_{12}'$, $3_{12}''$) de la règle de mesure ($2_{11}$, $2_{12}$) sont explorées sur chaque côté de l'axe de division, ($9_{11}$, $9_{12}$) par un unique élément photoélectrique ($20_{11}'$, $20_{11}''$, $20_{12}'$, $20_{12}''$) et que le signal de sortie de l'élément photoélectrique

($20_{11}'$, $20_{11}''$, $20_{12}'$, $20_{12}''$) sur chaque côté de l'axe de division ($9_{11}$, $9_{12}$) est modifié dans son amplitude.

5. Système de mesure suivant la revendication 1, caractérisé par le fait que la division ($3_1$) de la régle de mesure ($2_1$) s'étend sous un angle $\alpha_1$ inférieur à 90° par rapport à l'axe de division ($9_1$) et que l'unité d'exploration ($4_1$) ou l'élément d'exploration ($5_1$) est déplaçable en translation parallèlement au plan de division ($10_1$) de la régle de mesure ($2_1$) perpendiculairement à l'axe de division ($9_1$).

6. Système de mesure suivant la revendication 1, caractérisé par le fait que la division ($3_2$) de la régle de mesure ($2_2$) s'étend perpendiculairement à l'axe de division ($9_2$) et que l'unité d'exploration ($4_2$) ou l'élément d'exploration ($5_2$) est déplaçable en translation parallèlement au plan de division ($10_2$) de la régle de mesure ($2_2$) sous un angle $\alpha_2$ inférieur à 90° transversalement à l'axe de division ($9_2$).

7. Système de mesure suivant la revendication 1, caractérisé par le fait que les divisions ($3_3'$, $3_3''$) de la règle de mesure ($2_3$) s'étendent perpendiculairement à l'axe de division ($9_3$) et sont décalées sur les deux côtés de l'axe de division ($9_3$) réciproquement d'une valeur déterminée dans la direction de mesure (X) et que l'unité d'exploration ($4_3$) ou l'élément d'exploration ($5_3$) est déplaçable en translation parallèlement au plan de division ($10_3$) de la règle de mesure ($2_3$) perpendiculairement à l'axe de division ($9_3$).

8. Système de mesure suivant la revendication 2, caractérisé par le fait que la division ($3_4$) de la régle de mesure ($2_4$) s'étend sous un angle $\alpha_4$ inférieur à 90° par rapport à l'axe de division ($9_4$).

9. Système de mesure suivant la revendication 2, caractérisé par le fait que les divisions ($3_5'$, $3_5''$) de la règle de mesure ($2_5$) s'étendent perpendiculairement à l'axe de division ($9_5$) et sont, sur les deux côtés de l'axe de division ($9_5$), décalées réciproquement d'une valeur déterminée dans la direction de mesure X.

10. Système de mesure suivant la revendication 2, caractérisé par le fait que la division ($3_6$) de la règle de mesurre ($2_6$) s'étend perpendiculairement à l'axe de division ($9_6$) et que l'élément d'exploration ($5_6$) présente sur chaque côté de l'axe de division ($9_6$) au moins une division ($6_6'$, $6_6''$), lesdites divisions de l'élément d'exploration étant décalées réciproquement d'une valeur déterminée dans la direction de mesure X.

11. Système de mesure suivant la revendication 3, caractérisé par le fait que les deux éléments photoélectriques ($20_7'$, $20_7''$, $20_8'$, $20_8''$) au moins sur chaque côté de l'axe de division ($9_7$, $9_8$) sont associés à une division unique ($6_7'$, $6_7''$, $6_8'$, $6_8''$) de l'élément d'exploration ($5_7$, $5_8$).

12. Système de mesure suivant la revendication 3, caractérisé par le fait que chaque élément photoélectrique ($20_9'$, $20_9''$, $20_{10}'$, $20_{10}''$) sur chaque côté de l'axe de division ($9_9$, $9_{10}$) est associé à un champ de division particulier ($6_9'$, $6_9''$, $6_{10}'$, $6_{10}''$) de l'élément d'exploration ($5_9$, $5_{10}$).

13. Système de mesure suivant la revendication 4, caractérisé par le fait que l'élément photoélectrique ($20_{11}'$, $20_{11}''$, $20_{12}'$, $20_{12}''$) sur chaque côté de l'axe de division ($9_{11}$, $9_{12}$) est associé à une division unique ($6_{11}'$, $6_{11}''$, $6_{12}'$, $6_{12}''$) de l'élément exploration ($5_{11}$, $5_{12}$).

14. Système de mesure suivant les revendications 3 et 4, caractérisé par le fait que soit les divisions ($3_7'$, $3_7''$, $3_9'$, $3_9''$, $3_{11}'$, $3_{11}''$) des régles de mesure ($2_7$, $2_9$, $2_{11}$), soit les divisions ($6_8'$, $6_8''$, $6_{12}'$, $6_{12}''$) ou les champs de division ($6_{10}'$, $6_{10}''$) des éléments d'exploration ($5_8$, $5_{10}$, $5_{12}$) sont réciproquement décalés d'une valeur déterminée dans la direction de mesure X.

15. Système de mesure suivant la revendication 1, caractérisé par le fait qu'à la règle de mesure ($2$), est associé un profil de correction d'erreurs ($12$) qui est exploré par un élément de transmission ($13$) en vue du déplacement de l'unité d'exploration ($4$) ou de l'élément d'exploration ($5$) ou d'un écran ($16$).

16. Système de mesure suivant la revendication 1, caractérisé par le fait qu'à la règle de mesure ($2$) sont associés des organes de réglage ($15$) pour le déplacement de l'unité d'exploration ($4$) ou de l'élément d'exploration ($5$) ou d'un écran.

17. Système de mesure suivant la revendication 15, caractérisé par le fait que l'élément de transmission ($13$) est constitué par un rouleau.

# FIG.1a

# FIG.1b

FIG. 2

FIG. 3

## FIG. 4

## FIG. 5

## FIG. 6

FIG. 7

FIG. 8

FIG. 9

FIG.10

FIG.11

FIG.12